# FASCICULE DE BREVET EUROPEEN

(11) **EP 4 688 623 B1**
(45) Date de publication et mention de la délivrance du brevet: **09.12.2026**
(21) Numéro de dépôt: 24715849.6
(22) Date de dépôt: 08.03.2024
(51) Int. Cl.: B65G 59/10, B65G 59/06, G07F 11/24, G07F 9/10, G07F 11/70, G07F 11/16, G07F 17/00

(54) **DISTRIBUTEUR AUTOMATIQUE DE PRODUITS ALIMENTAIRES, ET NOTAMMENT DE PIZZAS INTEGRANT UN DISPOSITIF DE DEPILAGE**
AUTOMAT FÜR LEBENSMITTEL, INSBESONDERE FÜR PIZZAS, MIT INTEGRIERTER ENTSTAPELUNGSVORRICHTUNG
AUTOMATIC VENDING MACHINE FOR FOOD PRODUCTS, IN PARTICULAR PIZZAS, INCORPORATING AN UNSTACKING DEVICE

(30) Priorité: 30.03.2023 FR 2303081
(43) Date de publication de la demande: 11.02.2026
(73) Titulaire: KIS, 38130 Echirolles (FR)
(72) Inventeur: CRASNIANSKI, Serge, 1204 GENEVE (CH)
(74) Mandataire: Ipsilon
(86) Numéro de dépôt international: PCT/FR2024/050283
(87) Numéro de publication internationale: WO 2024/200942

(56) Documents cités:
- EP-A1- 2 680 242
- WO-A1-2005/044703
- WO-A1-2010/053690
- CN-A- 109 720 644
- CN-A- 113 291 543
- JP-A- H0 773 361
- JP-A- S5 878 919

## Description

### DOMAINE DE L'INVENTION

L'invention appartient au domaine technique de la distribution unitaire de produits plats et notamment d'emballages. Elle s'inscrit également dans le domaine des distributeurs automatiques de produits alimentaires, notamment chauds ou froids, tels que des pizzas, intégrant une chambre froide au sein de laquelle sont stockés lesdits produits alimentaires avant réchauffage le cas échéant, et distribution.

### ETAT ANTERIEUR DE LA TECHNIQUE

Les distributeurs automatiques de pizzas sont aujourd'hui bien connus. Ils permettent aux consommateurs de sélectionner, au moyen d'un dispositif interactif type écran tactile, une pizza déterminée à partir d'une liste définie, et d'obtenir, après paiement, la pizza souhaitée, le cas échéant réchauffée. Un distributeur selon le préambule de la revendication 1 est connu de EP 2 680 242 A1.

Classiquement, de tels distributeurs automatiques de pizzas comprennent une chambre réfrigérée destinée à stocker les emballages renfermant lesdites pizzas, éventuellement un four ou un moyen de chauffage pour réchauffer voire cuire la pizza, un convoyeur destiné à permettre le transfert de l'emballage de la chambre réfrigérée en direction des moyens de chauffage ou de distribution, et enfin un système de distribution de la pizza chaude ou froide à destination du consommateur.

Typiquement, la chambre réfrigérée comporte un certain nombre d'étagères, séparées les unes des autres d'une distance suffisante pour permettre le stockage des pizzas au sein de leur emballage. Ces étagères sont mues verticalement au moyen de vis sans fin ou d'un système équivalent. En raison de l'encombrement généré entre deux étagères consécutives, de telles chambres réfrigérées sont d'un encombrement relativement important et, en conséquence, le volume qu'elles définissent engendre la nécessité de mettre en œuvre un groupe frigorigène plus puissant et donc davantage consommateur d'énergie.

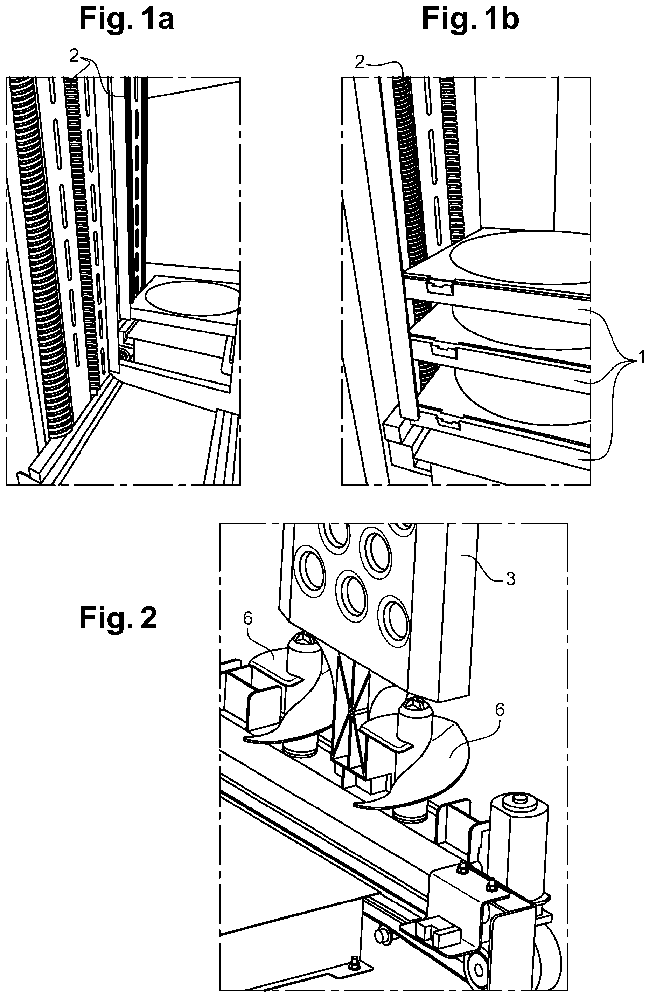

Afin de réduire le volume d'une telle chambre réfrigérée, il a été proposé de prévoir des emballages destinés à recevoir lesdites pizzas, de façon telle qu'ils présentent selon deux de leurs faces latérales opposées, une excroissance, apte à être reçue directement dans des vis sans fin, tel que par exemple illustré au sein de la figure 1.

Au sein de celle-ci, les emballages (1), en l'espèce en carton, présentent deux excroissances opposées partant du fond de l'emballage et reçues dans quatre vis sans fin (2) identiques, s'étendant sur toute la hauteur d'un magasin de stockage, tournant à la même vitesse et permettant l'acheminement, en l'espèce en direction du bas, des emballages en vue de leur traitement ultérieur. Si ce faisant, on peut en effet réduire le volume de la chambre réfrigérée en raison de l'absence de cloison ou d'étagères, en revanche l'expérience démontre que l'exploitant d'un tel distributeur, et donc assurant le remplissage de la chambre froide, éprouve quelques difficultés à positionner de manière horizontale les différents emballages, puisqu'il s'agit de faire glisser les excroissances au sein des espaces inter-filets des vis sans fin, espaces relativement réduits, ce qui s'avère donc particulièrement chronophage.

L'objet de la présente invention est de simplifier drastiquement ce rechargement de la chambre froide de tels distributeurs.

### EXPOSE DE L'INVENTION

A cet effet, l'invention vise un distributeur automatique de produits alimentaires, et notamment de pizzas intégrant un tel dispositif de dépilage.

Ce distributeur automatique de produits alimentaires comprend :
▪ une chambre réfrigérée au sein de laquelle sont stockés dans des emballages adaptés, les produits alimentaires, lesdits emballages étant stockés sous la forme d'une pile, les uns au-dessus des autres et au contact deux à deux les uns des autres ;
▪ un dispositif de dépilage intégré au sein de la chambre réfrigérée, constitué de quatre vis à filet hélicoïdal implantées deux à deux de manière antagoniste, lesdites vis étant identiques, c'est-à-dire dont le pas de l'hélice constitutive du filet est identique pour chacune des quatre vis, lesdites vis étant actionnés en rotation de manière discontinue et synchrone, ladite pile d'emballages étant apte à reposer par sa base sur le filet supérieur desdites vis ;
▪ un convoyeur positionné au niveau de la base du dispositif de dépilage, et apte à déplacer l'emballage unitaire acheminé à ce niveau par le dispositif de dépilage, en direction d'un dispositif de chauffage ou directement au niveau du lieu ou zone de récupération dudit emballage.

Autrement dit, le dispositif de dépilage du distributeur de l'invention est constitué de quatre vis symétriquement disposées deux à deux, et positionnés de telle sorte à servir également de guidage verticale auxdits emballages, la pile constituée par lesdits emballages reposant sur le filet desdites vis, et le pas de chacune desdites vis étant choisi de telle sorte à être adapté à l'épaisseur des emballages afin, lorsque les vis sont actionnées en rotation, et typiquement d'une seule rotation complète, d'assurer le dépilage d'un seul emballage à la fois, la pile reposant sur le filet supérieur des vis.

On comprend ainsi qu'un tel dispositif de dépilage permet de stocker, directement sous la forme de pile, les emballages en question, et non plus d'avoir à les insérer un à un au niveau soit d'étagères, soit des vis sans fin, comme décrit en relation avec la figure 1, et partant, d'une part de générer un gain de temps significatif pour l'exploitant d'un tel distributeur au sein duquel est intégré un tel dispositif de dépilage, et d'autre part de réduire le volume de la chambre réfrigérée et corollairement la puissance du groupe frigorigène.

Un tel distributeur peut en outre intégrer un moyen de sélection par le consommateur du produit alimentaire, et notamment de la pizza souhaitée, outre un moyen de prépaiement.

### BREVE DESCRIPTION DES FIGURES

La manière dont l'invention peut être réalisée et les avantages qui en découlent ressortiront mieux de l'exemple de réalisation qui suit, donné à titre indicatif et non limitatif, à l'appui des figures annexées.
La figure 1 est, comme déjà évoqué, une illustration schématique d'un dispositif de dépilage de l'art antérieur.
La figure 2 est une représentation schématique de partie du dispositif de dépilage de l'invention.
La figure 3 est une vue de détail de la figure 2
La figure 4 est une vue analogue à la figure 2, dans laquelle est illustrée la pile d'emballages reçus au sein du dispositif de dépilage.
La figure 5a est une vue schématique de face du dispositif de dépliage de l'invention faisant apparaître les emballages de pizzas en place avant dépilage.
La figure 5b est une vue schématique de face du dispositif de dépliage de l'invention faisant apparaître les emballages de pizzas en place, en cours de dépilage.
La figure 5c est une vue schématique de face du dispositif de dépliage de l'invention faisant apparaître les emballages de pizzas en place, avec l'emballage le plus inférieur dépilé.
La figure 6 est une vue schématique de dessus du dispositif de dépilage de l'invention.

### DESCRIPTION DETAILLEE DE L'INVENTION

On a représenté au sein de la figure 2 une partie de la chambre froide d'un distributeur automatique de pizzas. Plus spécifiquement, on observe une paroi latérale (3) de la chambre réfrigérée d'un tel distributeur, comportant en partie basse un dispositif de dépilage conforme à l'invention, étant précisé que la paroi latérale antagoniste (non représentée) comporte les mêmes éléments, et en l'espèce le même dispositif de dépilage.

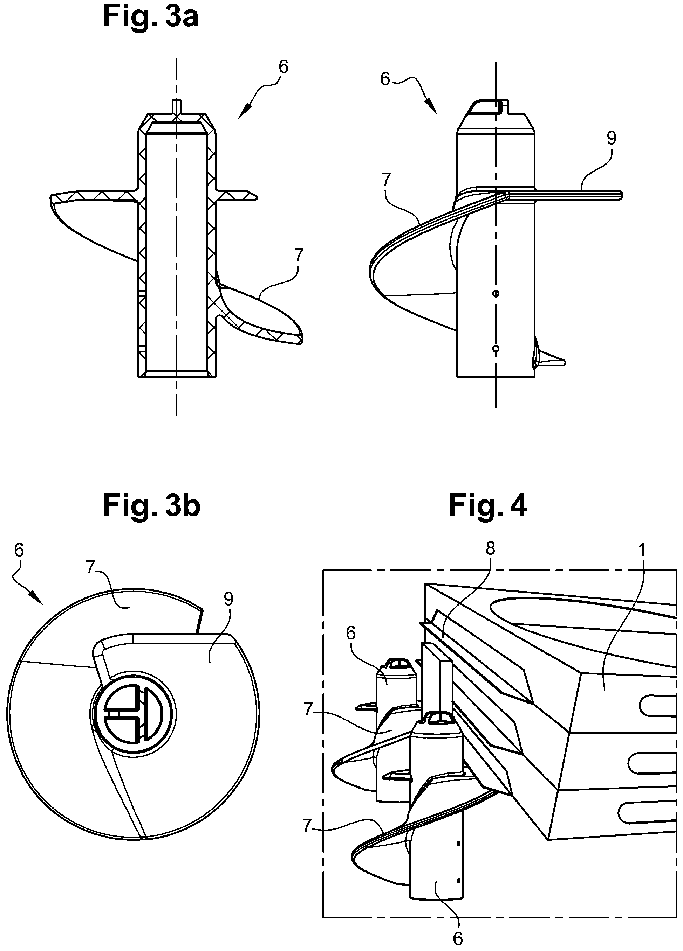

Chaque dispositif de dépilage comporte quatre vis (6), en l'espèce symétriquement implantées de telle sorte à être orientées par paires de part et d'autre de la pile d'emballages (1), ces derniers étant de forme rectangulaire ou carré. Sur les figures 2 et 4, seule une paire de telles vis (6) a été représentée.

Selon l'invention, chacune desdites vis (6) comporte un unique filet hélicoïdal (7) décrivant une unique spire. Le pas du filet (7) est identique pour chacune des vis (6). En l'espèce, le pas du filet (7) est typiquement de l'ordre de 6 centimètres, compatible avec l'épaisseur d'un emballage de pizzas (1) typiquement voisin de 3 à 4 centimètres.

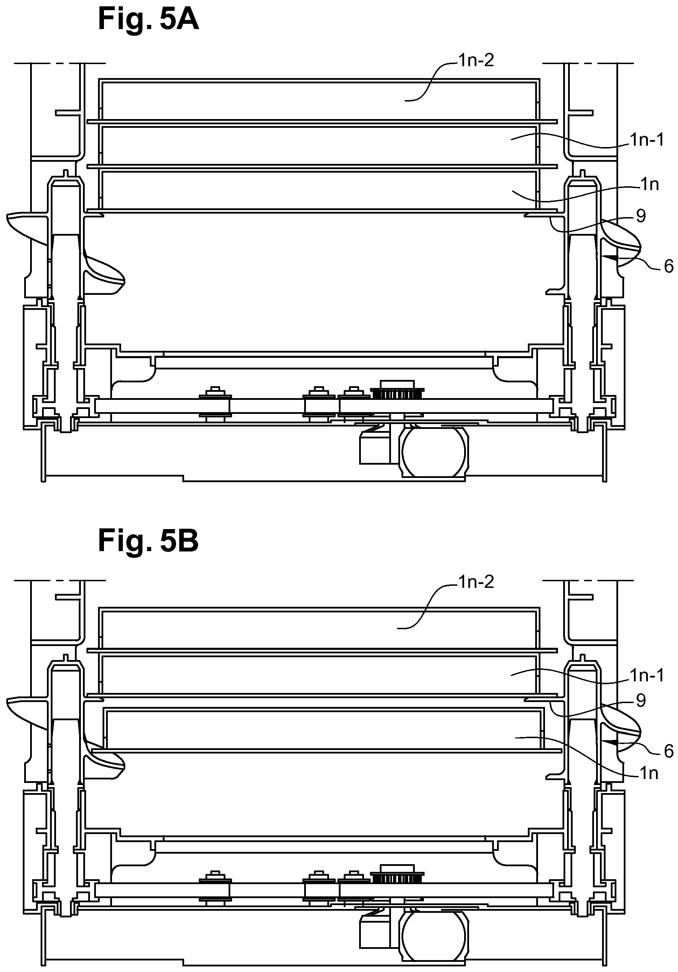

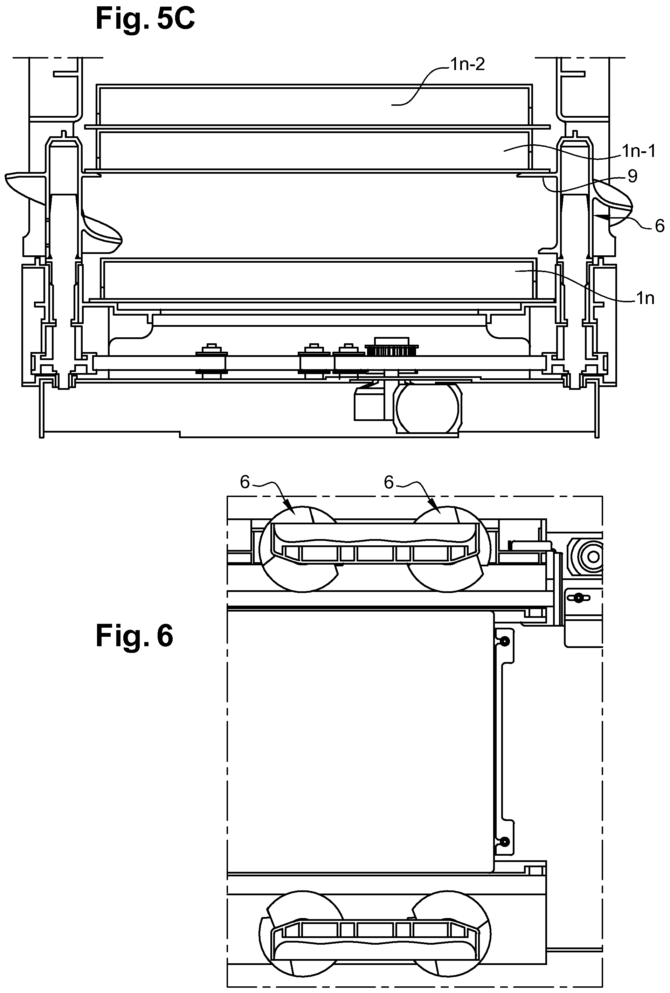

Comme on peut l'observer sur les figures 4 et 5, ces emballages (1) sont stockés sous forme d'une pile, c'est-à-dire en contact deux à deux les uns des autres. Cette pile repose sur le filet (7) à l'extrémité supérieure des quatre vis. Plus précisément, lesdits emballages en l'espèce en carton, sont chacun munis d'excroissances planes (8), situées dans le même plan que le fond desdits emballages, au niveau de deux de leurs faces latérales opposées.

Ces excroissances (8) sont destinées à reposer sur lesdits filets (7), tel qu'on peut bien l'observer sur les figures 4 et 5. Une partie du fond de l'emballage repose également sur lesdits filets.

Il convient en outre de relever que chacune des quatre vis constitutives du dépileur, toutes de même hauteur, présente une orientation ou un positionnement du filet (7) identique en coordonnées polaires ; dit autrement, et ainsi qu'on peut bien l'observer sur les figures 2 et 4, la hauteur du filet est identique pour chacune des quatre vis, de telle sorte que la pile d'emballage (1) repose de manière horizontale d'une part, et d'autre part afin que lors de la mise en rotation desdites vis, l'emballage le plus inférieur de la pile progresse également de manière horizontale en direction du bas de la chambre réfrigérée. A cet effet, les quatre vis (6) tournent de manière synchrone. Pour ce faire, elles sont actionnées en rotation au moyen d'un seul moteur électrique et par l'intermédiaire d'un système de courroies et de poulies.

La rotation de 360° simultanée et synchrone des quatre vis, dans l'exemple décrit dans le sens contraire des aiguilles d'une montre, engendre la progression de l'emballage le plus inférieur de la pile en direction du bas de la chambre réfrigérée, et corollairement, la descente de la pile d'une unité d'emballage, l'emballage n-1 reposant alors à son tour sur le filet desdites vis.

Ainsi, après sélection par un consommateur de la pizza de son choix, le dispositif de dépilage considéré engendre une rotation synchrone des quatre vis qui le constituent, engendrant la progression en direction du bas de la chambre froide de l'emballage n le plus inférieur de la pile et, corollairement, l'abaissement de la pile au niveau de l'extrémité supérieure des vis. Cette rotation des quatre vis est donc synchrone et est discontinue, fonction bien évidemment de la sélection par un consommateur de la pizza considérée.

On conçoit de fait tout l'intérêt du dispositif de dépilage mis en œuvre au sein du distributeur de l'invention, et tout particulièrement pour l'exploitant d'un tel distributeur automatique. En effet, il suffit pour ce dernier de simplement ouvrir la porte d'accès à la chambre froide et de déposer une pile entière d'emballages contenant les pizzas considérées, sans nécessiter un quelconque positionnement individuel de chacun des emballages.

Corollairement, en raison de ce stockage par pile, le volume de la chambre réfrigérée est diminué, le groupe frigorigène est de puissance moindre en raison de la réduction du volume, et par voie de conséquence la consommation d'énergie en l'espèce électrique est également diminuée.

## Revendications

1. Distributeur automatique de produits alimentaires, et notamment de pizzas, comprenant :
▪ une chambre réfrigérée au sein de laquelle sont stockés, dans des emballages adaptés, les produits alimentaires, lesdits emballages étant stockés sous la forme d'une pile les uns au-dessus des autres et au contact deux à deux les uns des autres ;
▪ un dispositif de dépilage unitaire des emballages, intégré au sein de la chambre réfrigérée, ledit distributeur automatique de produits alimentaires étant **caractérisé en ce que** ledit dispositif de dépilage unitaire des emballages est constitué de quatre vis (6) à filet (7) hélicoïdal implantées deux à deux de manière antagoniste, lesdites vis étant identiques, c'est-à-dire dont le pas de l'hélice constitutive du filet est identique pour chacune des quatre vis, lesdites vis étant actionnés en rotation de manière discontinue et synchrone, ladite pile d'emballages étant apte à reposer par sa base sur le filet supérieur desdites vis ;
et **en ce que** un convoyeur est positionné au niveau de la base du dispositif de dépilage, et est apte à déplacer l'emballage unitaire acheminé à ce niveau par le dispositif de dépilage, en direction d'un dispositif de chauffage ou en direction de la zone de récupération dudit emballage.

2. Distributeur automatique de produits alimentaires, et notamment de pizzas selon la revendication 1, ***caractérisé* en ce que** le pas de l'hélice constitutive du filet (7) desdites vis (6) est adapté à l'épaisseur des objets plats, de telle sorte qu'une rotation complète des vis engendre le dépilage d'un seul objet plat.

3. Distributeur automatique de produits alimentaires, et notamment de pizzas selon l'une des revendications 1 et 2, comprenant en outre un moyen de sélection dudit produit alimentaire, et notamment de la pizza souhaitée et de prépaiement.

## Patentansprüche

1. Automat für Lebensmittel, insbesondere für Pizzas, umfassend:
▪ eine Kühlkammer, in der die Lebensmittel in geeigneten Verpackungen gelagert sind, wobei die Verpackungen in Form eines Stapels übereinander und jeweils paarweise aufeinanderliegend gelagert sind;
▪ eine in die Kühlkammer integrierte Vorrichtung zum einzelnen Entstapeln der Verpackungen, wobei der Automat für Lebensmittel **dadurch gekennzeichnet ist, dass** die Vorrichtung zum einzelnen Entstapeln der Verpackungen aus vier Schnecken (6) mit spiralförmigem Gewinde (7) besteht, die paarweise gegenläufig angeordnet sind, wobei die Schnecken identisch sind, das heißt, deren Steigung des das Gewinde bildenden Gewindegangs bei jeder der vier Schnecken identisch ist, wobei die Schnecken diskontinuierlich und synchron in Drehung versetzt werden, wobei der Verpackungsstapel in der Lage ist, mit seiner Basis auf dem oberen Gewindegang der Schnecken aufzuliegen;
▪ und dadurch, dass an der Basis der Entstapelungsvorrichtung ein Förderer angeordnet ist, der in der Lage ist, die von der Entstapelungsvorrichtung an diese Stelle beförderte Einzelverpackung in Richtung einer Heizvorrichtung oder in Richtung des Entnahmebereichs dieser Verpackung zu befördern.

2. Automat für Lebensmittel, insbesondere für Pizzas nach Anspruch 1, **dadurch *gekennzeichnet*, dass** die Steigung des das Gewinde (7) bildenden Gewindegangs der Schnecken (6) an die Dicke der Flachprodukte angepasst ist, sodass eine vollständige Umdrehung der Schnecken das Entstapeln eines einzigen Flachprodukts bewirkt.

3. Automat für Lebensmittel, insbesondere für Pizzas nach einem der Ansprüche 1 und 2, der außerdem ein Mittel zur Auswahl des betreffenden Lebensmittels, insbesondere der gewünschten Pizza, und zur Vorauszahlung umfasst.

## Claims

1. Automatic dispenser of food products, and in particular pizzas, comprising:
▪ a refrigerated chamber in which the food products are stored in suitable packages, said packages being stored in the form of a stack one above the other and in pairwise contact with one another;
▪ a device for individually unstacking the packages, integrated within the refrigerated chamber, said automatic dispenser of food products being **characterised in that** said device for individually unstacking the packages consists of four screws (6) having a helical thread (7) arranged in antagonistic pairs, said screws being identical, that is to say, the pitch of the helix forming the thread being identical for each of the four screws, said screws being driven in rotation discontinuously and synchronously, said stack of packages being capable of resting by its base on the upper thread of said screws;
▪ and **in that** a conveyor is positioned at the base of the unstacking device and is capable of moving the individual package conveyed to this level by the unstacking device towards a heating device or towards the retrieval area for said package.

2. Automatic dispenser of food products, and in particular pizzas according to claim 1, ***characterised* in that** the pitch of the helix constituting the thread (7) of said screws (6) is adapted to the thickness of the flat objects, so that a complete rotation of the screws causes the unstacking of a single flat object.

3. Automatic dispenser for food products, and in particular pizzas according to any one of claims 1 and 2, further comprising a means for selecting said food product, and in particular the desired pizza and for prepayment.
